# EUROPEAN PATENT SPECIFICATION

(11) **EP 3 921 188 B1**
(45) Date of publication and mention of the grant of the patent: **17.01.2024**
(21) Application number: 20702926.5
(22) Date of filing: 31.01.2020
(51) Int. Cl.: B60C 19/00, B29D 30/06

(54) **TYRE COMPRISING A SEALANT LAYER AND A SOUND-ABSORBING ELEMENT**
REIFEN MIT EINER DICHTUNGSSCHICHT UND EINEM SCHALLABSORBIERENDEN ELEMENT
PNEU COMPRENANT UNE COUCHE D'ÉTANCHÉITÉ ET UN ÉLÉMENT D'ABSORPTION ACOUSTIQUE

(30) Priority: 05.02.2019 IT 201900001641
(43) Date of publication of application: 15.12.2021
(73) Proprietor: Bridgestone Europe NV/SA, 1930 Zaventem (BE)
(72) Inventor: FRESCH, Enrico, 00128 Rome (IT)
(74) Representative: Marchetti, Alessio
(86) International application number: PCT/IB2020/050793
(87) International publication number: WO 2020/161579

(56) References cited:
- DE-A1-102009 024 454
- DE-A1-102011 053 686
- DE-A1-102015 221 698
- JP-A- 2005 104 314

## Description

The invention relates to a tyre comprising both a sealant layer to ensure the functionality of the tyre itself even after it has been punctured and a sound-absorbing element to reduce the noise produced during the use.

In order to ensure the functionality of the tyre even after the latter has been punctured, the use of a viscous sealant layer arranged in its inner cavity has been known for a long time. In particular, the sealant layer is arranged in contact with an impermeable layer (hereinafter referred to as "innerliner"), in the area of the tread band.

The function of the sealant layer is that of creating a sort of instantaneous "seal" around the object that penetrated the tread, thus preventing air from flowing out of the tyre. Furthermore, in case the aforesaid object comes out, the material of the sealant layer has the function of filling the hole left by the object, hence sealing it.

The viscosity of the sealant layer is one of the most important parameters that allows it to effectively carry out the tasks described above. Indeed, the viscosity of the sealant layer must be such as to ensure both the sealing action to be exerted upon the object that penetrated the tread and the hole left by the object itself in a very short time, as discussed above, and its dimensional stability in the inner cavity of the tyre during the rolling phase or the standing phase of the tyre.

In the tyre industry, the use of a sound-absorbing layer is known, which is also arranged inside the cavity of the tyre. Indeed, one of the noises produced by an operating tyre is the resonance cavity sound generated by the vibrations of the air under pressure present in its inner cavity, which, as it is known, is coated by the innerliner and is filled with air under pressure. The sound-absorbing layer is usually made of a foam material and is applied on the surface of the innerliner facing the cavity.

The most commonly known material used for this purpose is polyurethane foam. Indeed, polyurethane foam offers the advantage of having a low water absorption and, as a consequence, of being less subjected to a weight increase over time, with consequent advantages in terms of rolling resistance and consumptions of the vehicles deriving therefrom.

In case the sealing action and the sound-absorbing action needed to be combined in one single tyre, its inner cavity should simultaneously house both the sealant layer and the sound absorbing layer. Obviously, considering the mechanism with which the sealant layer operates, the experimented engineering has adopted a sealant layer arranged in contact with the innerliner and a foam material arranged, in turn, in contact with the sealant layer on the opposite side relative to the innerliner. An example of such a tyre is disclosed in DE 10 2015 221 698 A.

This solution turned out to be ineffective, as experiments have shown that the foam material physically interacts with the sealant layer, with the consequence of jeopardizing both the sound-absorbing properties of the former and the sealing properties of the latter.

Therefore, there was the need to rely on a solution that allows manufacturers to use, in the inner cavity of a tyre, both the sealant layer and the sound-absorbing element leaving, in the same time, the respective sealing and sound-absorbing properties unchanged.

The inventor of this invention devised a solution that is capable of meeting the needs discussed above in a simple and economic manner.

The subject-matter of the invention is a tubeless tyre comprising a tread, a carcass defining an inner cavity, an innerliner designed to ensure that the air contained in the inner cavity of the carcass remains under pressure, a sealant layer arranged in said inner cavity in contact with the innerliner, and a sound-absorbing layer, made of foamed material, which is also arranged in said inner cavity; said tyre being characterized in that it comprises a support structure housed inside said inner cavity and designed to support said sound-absorbing layer, always keeping it separate from said sealant layer; said support structure being made of polymeric non-foamed material and comprising a spacing portion having an end in contact with said innerliner and partially immersed in said sealant layer and a support portion, on which said sound-absorbing layer is fixed.

Said support structure preferably comprises a plurality of legs, each having an end in contact with said innerliner.

By so doing, the surface of the innerliner not covered by the sealant layer is minimized as much as possible.

Said support structure is made of a material having a Young's modulus ranging from 1000 to 2900 N/mm² and, preferably, the distance between the support portion and a free surface of said sealant layer is at least 2 mm.

In this way, during the rotation of the tyre, the support portion is prevented from bending, thus causing the sound-absorbing material to come into contact with the sealant layer, which, hence, jeopardized the effectiveness of both.

The material making up the support structure preferably is acrylonitrile butadiene styrene (ABS). ABS has a high hardness and a high impact resistance. Another of the advantages of ABS lies in its recyclability.

Another material with which the support structure can preferably be manufactured is silicone. This material has the advantage of being able to be easily removed from the tyre, thus ensuring a correct recycle of the tyre itself.

The support structure is preferably manufactured by means of 3D printing or injection moulding or extrusion.

The thickness of the sealant layer preferably ranges from 0.5 to 6 mm; on the other hand, the thickness of the sound-absorbing layer preferably ranges from 2 to 50 mm.

Said support portion preferably has a width ranging from 5 to 50 mm.

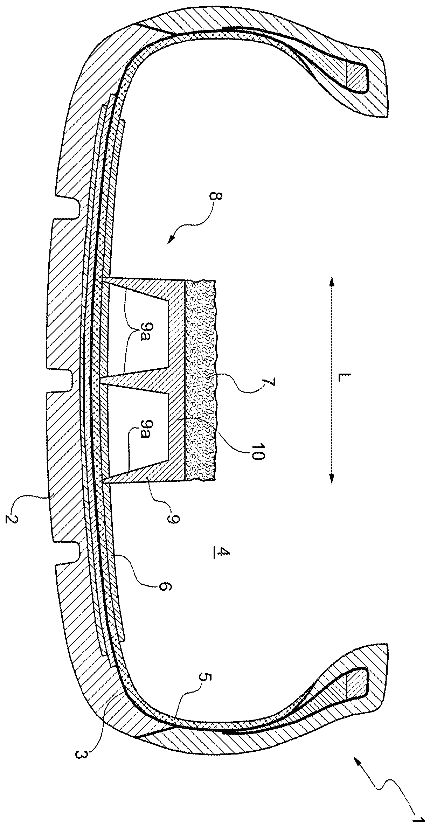

Hereinafter you can find a description of an embodiment of the invention, by mere way of example, with the aid of the accompanying figure, which shows a cross section of the tyre according to the invention.

In the aforesaid figure, number 1 indicates, as a whole, a tyre according to the invention.

The tyre 1 comprises a tread 2, a carcass 3 defining an inner cavity 4 of the tyre 1, an innerline 5 facing the inner cavity 4 and designed to make sure that the air contained in the inner cavity 4 remains under pressure, a sealant layer 6 arranged in contact with the impermeable layer 5 in the area of the tread 2, and a sound-absorbing layer 7 arranged inside the cavity 4 in order to attenuate the resonance cavity sound generated by the operating tyre.

The tyre 1 further comprises a support structure 8 designed to support the sound-absorbing layer 7, though keeping it separate from the sealant layer 6.

The support structure 8 comprises a spacing portion 9, which, in the example shown herein, consists of a plurality of legs 9a, and a support portion 10, on which the sound-absorbing layer 7 is arranged.

The spacing portion 9 has a first end in contact with the innerliner 5 and a second end fixed to the support portion 10. According to the figure, the spacing portion rests on the innerliner 5 and goes through the sealant layer 6 from which it extends, so as to keep the support portion 10 - and, hence, the sound-absorbing layer 7 fixed to thereto - properly spaced apart from the sealant layer 6. By so doing, it is assured that the sound-absorbing layer 7 made of foamed material does not come into contact with the sealant layer 6, which could jeopardize the functionality of both. Indeed, in contact with the sealant layer there is only the support portion 10, which being not made of a non-foamed material, will not physically interact with the sealant layer.

As a person skilled in the art can immediately understand, during the rotation of the operating tyre, the support structure 8 necessarily is subjected to forces that could deform it. In order to prevent the support structure 8 from being deformed in such a way that it cannot ensure any longer the separation between the sealant layer 6 and the sound-absorbing layer 7, the material with which the support structure 8 is manufactured must have a Young's modulus ranging from 1000 to 2900 N/mm² and the distance between the support portion 8 and the free surface of the sealant layer 6 preferably is at least 2 mm.

In particular, the material making up the support structure 8 of the example is ABS, which has mechanical features that well suit the needs of the invention.

Another material that can advantageously be used to manufacture the support structure 8 is silicone. Silicone has the advantage of being able to be easily removed from the tyre, thus ensuring a correct recycle of the tyre itself. Both possibilities may coexist within the support structure.

Owing to the above, it is evident that the invention, thanks to the presence of the support structure, allows manufacturers to produce a tyre comprising, at the same time and in an effective manner, a sealant layer and a sound-absorbing layer, though without being affected by the problems of the prior art. This leads to a tyre whose technical features are capable both of countering the effects of a punctured tyre through the sealant layer and of attenuating the noise generated inside the inner cavity by means of the sound-absorbing layer.

## Claims

1. A tubeless tyre (1) comprising a tread (2), a carcass (3) defining an inner cavity (4), an innerliner (5) designed to ensure that the air contained in the inner cavity (4) of the carcass (3) remains under pressure, a sealant layer (6) arranged in said inner cavity (4) in contact with the innerliner (5), and a sound-absorbing layer (7), made of foamed material, which is also arranged in said inner cavity (4); said tyre being **characterized in that** it comprises a support structure (8) housed inside said inner cavity (4) and designed to support said sound-absorbing layer (7), always keeping it separate from said sealant layer (6); said support structure (8) comprising a spacing portion (9) having an end in contact with said innerliner (5) and partially immersed in said sealant layer (6) and a support portion (10), on which said sound-absorbing layer (7) is fixed; the tyre being **characterised in that** said support structure (8) is made of polymeric non-foamed material having a Young's modulus ranging from 1000 to 2900 N/mm².

2. A tyre according to claim 1, **characterized in that** said support structure (8) comprises a plurality of legs (9a), each having an end in contact with said innerliner (5).

3. A tyre according to claim 1 or 2, **characterized in that** the distance between the support portion (10) and a free surface of said sealant layer (7) is at least 2 mm.

4. A tyre according to one of the previous claims, **characterized in that** the material making up the support structure is acrylonitrile butadiene styrene (ABS).

5. A tyre according to one of the claims 1 to 3, **characterized in that** the material making up the support structure is silicone.

6. A tyre according to one of the preceding claims, **characterized in that** said support structure (8) is manufactured by means of 3D printing or injection moulding or extrusion.

7. A tyre according to one of the preceding claims, **characterized in that** the thickness of the sealant layer ranges from 0.5 to 6 mm; and the thickness of the sound-absorbing layer preferably ranges from 2 to 50 mm.

8. A tyre according to one of the preceding claims, **characterized in that** said support portion (10) has a width (L) ranging from 5 to 50 mm.

## Patentansprüche

1. Schlauchloser Reifen (1), umfassend eine Lauffläche (2), eine Karkasse (3), die einen inneren Hohlraum (4) definiert, einen Innerliner (5), der dazu ausgelegt ist, sicherzustellen, dass die in dem inneren Hohlraum (4) der Karkasse (3) enthaltene Luft unter Druck bleibt, eine Dichtmittelschicht (6), die in dem inneren Hohlraum (4) in Kontakt mit dem Innenauskleidung (5) angeordnet ist, und eine schallabsorbierende Schicht (7), die aus geschäumtem Material hergestellt ist, die ebenso in dem inneren Hohlraum (4) angeordnet ist; wobei der Reifen **dadurch gekennzeichnet, dass** der eine Stützstruktur (8) umfasst, die im Inneren des inneren Hohlraums (4) untergebracht ist und dazu ausgelegt ist, die schallabsorbierende Schicht (7) zu stützen, wobei sie diese immer getrennt von der Dichtmittelschicht (6)hält; die Stützstruktur (8) umfassend einen Beabstandungsabschnitt (9), der ein Ende aufweist, das mit dem Innerliner (5) in Kontakt steht und teilweise in die Dichtmittelschicht (6) eingetaucht ist, und einen Stützabschnitt (10), auf dem die schallabsorbierende Schicht (7) befestigt ist; wobei der Reifen **dadurch gekennzeichnet, dass** die Stützstruktur (8)aus polymerem nicht geschäumtem Material hergestellt ist, das ein Elastizitätsmodul in dem Bereich von 1000 bis 2900 N/mm² aufweist.

2. Reifen nach Anspruch 1, **dadurch gekennzeichnet, dass** die Stützstruktur (8) eine Vielzahl von Schenkeln (9a) umfasst, die jeweils ein Ende aufweisen, das mit dem Innerliner (5) in Kontakt steht.

3. Reifen nach Anspruch 1 oder 2, **dadurch gekennzeichnet, dass** der Abstand zwischen dem Stützabschnitt (10) und einer freien Oberfläche der Dichtmittelschicht (7) mindestens 2 mm beträgt.

4. Reifen nach einem der vorstehenden Ansprüche,
**dadurch gekennzeichnet, dass** das Material, das die Stützstruktur ausmacht, Acrylnitril-Butadien-Styrol (ABS) ist.

5. Reifen nach einem der Ansprüche 1 bis 3,
**dadurch gekennzeichnet, dass** das Material, das die Stützstruktur ausmacht, Silikon ist.

6. Reifen nach einem der vorstehenden Ansprüche,
**dadurch gekennzeichnet, dass** die Stützstruktur (8) mittels 3D-Druck oder Spritzgießen oder Extrusion gefertigt wird.

7. Reifen nach einem der vorstehenden Ansprüche,
**dadurch gekennzeichnet, dass** die Dicke der Dichtmittelschicht in dem Bereich von 0,5 bis 6 mm liegt; und die Dicke der schallabsorbierenden Schicht vorzugsweise in dem Bereich von 2 bis 50 mm liegt.

8. Reifen nach einem der vorstehenden Ansprüche,
**dadurch gekennzeichnet, dass** der Stützabschnitt (10) eine Breite (L) in dem Bereich von 5 bis 50 mm aufweist.

## Revendications

1. Pneumatique sans chambre à air (1) comprenant une bande de roulement (2), une carcasse (3) définissant une cavité interne (4), un calandrage intérieur (5) conçu pour garantir que l'air contenu dans la cavité interne (4) de la carcasse (3) reste sous pression, une couche d'étanchéité (6) disposée dans ladite cavité interne (4) en contact avec le calandrage intérieur (5), et une couche d'absorption acoustique (7), constituée d'un matériau moussé, qui est également disposée dans ladite cavité interne (4) ; ledit pneumatique étant **caractérisé en ce qu'**il comprend une structure de support (8) logée à l'intérieur de ladite cavité interne (4) et conçue pour supporter ladite couche d'absorption acoustique (7), la maintenant toujours séparée de ladite couche d'étanchéité (6) ; ladite structure de support (8) comprenant une partie d'espacement (9) ayant une extrémité en contact avec ledit calandrage intérieur (5) et partiellement immergée dans ladite couche d'étanchéité (6) et une partie de support (10), sur laquelle ladite couche d'absorption acoustique (7) est fixée ; le pneumatique étant **caractérisé en ce que** ladite structure de support (8) est constituée d'un matériau polymère non moussé ayant un module de Young allant de 1 000 à 2 900 N/mm².

2. Pneumatique selon la revendication 1, **caractérisé en ce que** ladite structure de support (8) comprend une pluralité de pieds (9a), chacun ayant une extrémité en contact avec ledit calandrage intérieur (5).

3. Pneumatique selon la revendication 1 ou 2, **caractérisé en ce que** la distance entre la partie de support (10) et une surface libre de ladite couche d'étanchéité (7) est d'au moins 2 mm.

4. Pneumatique selon l'une des revendications précédentes, **caractérisé en ce que** le matériau constituant la structure de support est acrylonitrile butadiène styrène (ABS).

5. Pneumatique selon l'une des revendications 1 à 3, **caractérisé en ce que** le matériau constituant la structure de support est silicone.

6. Pneumatique selon l'une des revendications précédentes,
**caractérisé en ce que** ladite structure de support (8) est fabriquée par impression 3D ou par moulage par injection ou par extrusion.

7. Pneumatique selon l'une des revendications précédentes,
**caractérisé en ce que** l'épaisseur de la couche d'étanchéité va de 0,5 à 6 mm ; et l'épaisseur de la couche d'absorption acoustique va de préférence de 2 à 50 mm.

8. Pneumatique selon l'une des revendications précédentes,
**caractérisé en ce que** ladite partie de support (10) a une largeur (L) allant de 5 à 50 mm.
